(19) Europäisches Patentamt

European Patent Office

Office européen des brevets

(11) **EP 1 023 118 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(21) Anmeldenummer: **98950073.1**

(22) Anmeldetag: **23.09.1998**

(51) Int Cl.⁷: $B01F\ 3/08$, $B01F\ 5/04$, $C08J\ 3/03$

(86) Internationale Anmeldenummer:
**PCT/EP98/06058**

(87) Internationale Veröffentlichungsnummer:
**WO 99/015263 (01.04.1999 Gazette 1999/13)**

(54) **VORRICHTUNG UND VERFAHREN ZUR HERSTELLUNG VON SILICONEMULSIONEN**

DEVICE AND METHOD FOR PRODUCING SILICONE EMULSIONS

PROCEDE ET DISPOSIITF POUR PREPARER DES EMULSIONS A BASE DE SILICONE

(84) Benannte Vertragsstaaten:
**AT BE CH DE ES FR GB IT LI NL**

(30) Priorität: **25.09.1997 DE 19742308**
**31.03.1998 DE 19814267**

(43) Veröffentlichungstag der Anmeldung:
**02.08.2000 Patentblatt 2000/31**

(73) Patentinhaber: **GE Bayer Silicones GmbH & Co. KG**
**40699 Erkrath (DE)**

(72) Erfinder:
• **DE MONTIGNY, Armand**
**D-51373 Leverkusen (DE)**
• **ORTMANN, Richard**
**D-51107 Köln (DE)**
• **KLINKSIEK, Bernd**
**D-51429 Bergisch-Gladbach (DE)**

(56) Entgegenhaltungen:
EP-A- 0 399 266          EP-A- 0 475 284
EP-A- 0 554 719          EP-A- 0 616 989
EP-A- 0 685 544          EP-A- 0 791 566
DE-A- 1 519 834          GB-A- 2 233 572

EP 1 023 118 B1

## Beschreibung

Die Erfindung betrifft eine Vorrichtung und ein Verfahren zur Herstellung feinteiliger und stabiler Siliconemulsionen, insbesondere zur Herstellung von Öl in Wasser Emulsionen mit möglichst reduziertem Emulgatorgehalt.

Es sind eine Reihe von Verfahren zur Emulgierung unlöslicher Silicone bzw. Silane in Wasser bekannt. So werden im allgemeinen im Vorfeld der eigentlichen Homogenisierung entweder in das Silicon, in dem der Emulgator fein verteilt ist, langsam geringe Mengen Wasser eingerührt, so daß eine Wasser in Öl Emulsion entsteht, die durch anschließende Verdünnung mit Wasser invertiert wird, bevor sie in einer speziellen Anlage unter Einwirkung von Scherkräften zu einer feinteiligen Emulsion homogenisiert wird, oder das Silicon wird langsam in ein wäßriges Emulgatorgemisch unter Rühren eingebracht, bevor die entstandene grobteilige Emulsion der eigentlichen Homogenisierung unterworfen wird.

Das anfänglich zusammengerührte Gemisch kann je nach Art des Verfahrens und des Wirkstoffes, der Emulgatorkonzentration, der eingebrachten Rührenergie und vor allem der investierten Zeit schon eine ausreichend stabile Emulsion darstellen. In der Regel sind diese Emulsionen, die als Voremulsionen bezeichnet werden, jedoch grobteilig und müssen infolge mangelnder Stabilität sofort der eigentlichen Homogenisierung zugeführt werden. Homogenisiergeräte und Verfahren sind in Ullmann's Encyclopedia of Industrial Chemistry Vol A9 Edition 1987, Seite 309 bis 310 beschrieben. Die Herstellung der Voremulsion erfolgt in Rühraggregaten und ist je nach Art der nachgeschalteten Homogenisiermaschine der zeitbestimmende Schritt.

Weitere Verfahren zur Herstellung von Siliconemulsionen sind aus EP - A-043 091 und EP - A 0 579 458 bekannt. Im Verfahren der EP-A-043 091 wird wenig Wasser mit dem gesamten Emulgator die vollständige Menge Silicon zugeführt, so daß eine hochviskose Paste bzw. ein Gel entsteht, die im Anschluß durch Verdünnung in die endgültige Emulsion überführt wird.

Problematisch wird die Herstellung der Voremulsion nach den klassischen Verfahren durch die Zugabe des Siloxanes bzw. Silanes zu der überschüssigen Wasser/Emulgatorphase, insbesondere beim Einsatz von Siliciumverbindungen, die sowohl aus monomeren, linearen wie auch harzartigen gegebenenfalls mit niedrigmolekulen Siloxanen oder organischen Verbindungen verdünnten Strukturen bestehen können, wenn diese im Prinzip mit der wäßrigen Phase reagieren können. Hierunter fallen beispielsweise Alkylalkoxysilane, Alkoxygruppen tragende Harze sowie gegebenenfalls beider Gemische.

Ein weiteres Problem besteht darin, daß die Herstellung der Voremulsion nach den bekannten Verfahren besonders zeitaufwendig sind. Der Zulauf der Siloxankomponente in die Wasserphase erfolgt kontrolliert unter Rühren, d.h. so, daß eine optimale Durchmischung erhalten wird. Dies erlaubt keine schnelle Zugabe.

Dabei treffen die ersten Moleküle des Wirkstoffes auf einen riesigen Wasserüberschuß, der sich erst im Laufe der Zeit den gewünschten Konzentrationen nähert und eine grobteilige, instabile Voremulsion liefert, die schnellstens dem Homogenisator zugeführt werden muß.

Während dieser Zugabe sind im Falle wasserempfindlicher Komponenten diese nur unzureichend vor dem Angriff der wäßrigen Phase, auch im Falle einer Pufferung derselben, geschützt, so daß es zur Reaktion der entsprechenden Komponenten untereinander kommen kann. Dies kann bewirken, daß die nachfolgende Homogenisierung infolge eines Kondensationsprozesses, gefolgt von einem Viskositätsaufbau in den resultierenden groben Emulsions - Teilchen, erschwert wird, bzw. daß die Voremulsion so labil wird, daß sie dem Homogenisator gar nicht mehr zugeführt werden kann. Diesem Mangel kann durch eine kräftige Erhöhung des Emulgators (in dem Bereich von 5 %) zwar gegengesteuert werden, führt jedoch zu unerwünschten Ergebnissen bei vielen Anwendungen und zu einer Belastung der Umwelt.

Desweiteren führen z. B. im Falle von Alkylalkoxysilanen Hydrolyse- und Kondensationsreaktionen während der Emulgierung in der Regel zur Unwirksamkeit bei der Anwendung und somit zur Unbrauchbarkeit der resultierenden Emulsion.

Wird die Voremulsion über eine Paste bzw. ein Gel hergestellt, die anschließend in einem speziellen Verfahren verdünnt werden, so lassen sich in solchen Fällen, in denen kein Wert auf Emulgatorgehalte gelegt werden, Emulsionen mit niedrigen mittleren Teilchengrößen herstellen, wobei allerdings keine Angaben über deren Verteilung gemacht werden.

Da es eine Reihe von Siliconwirkstoffen gibt, die zumindest bei den geforderten Emulgatormengen nur in unzulänglichem Maße Pasten liefern, sind diese Verfahren in ihrer Anwendungsbreite beschränkt. Desweiteren sind eine Reihe von Emulsionen, wie z.B. Entschäumeremulsionen, bzw. emulgatorarme (< 5 %) und gleichzeitig wirkstoffarme (≤ 20 %) Emulsionen nach diesem Verfahren nicht befriedigend herstellbar. So erhält man im Verfahren nach EP 0 579 458 mit viel Zeitaufwand ( s. Beispiele dort ) Emulsionen mit sehr grossen Teilchen im Bereich von 3-60 µm.

Aufgabe der vorliegenden Erfindung war daher die Bereitstellung eines schnell ablaufenden, und somit wirtschaftlichen Verfahrens, das die beschriebenen Nachteile nicht besitzt und die Herstellung feinteiliger, enge Teilchengrößenverteilungen aufweisender Emulsionen mit niedrigen Emulgatorgehalten und niedrig bis hohen Wirkstoffkonzentrationen erlaubt, sowie die Bereitstellung einer fiir dieses Verfahren geeigneten Vorrichtung. Dabei sollten wasserempfindliche Wirkstoffe zu - auch über ein Jahr hinaus - stabilen und vor allem wirksamen Emulsionen führen.

Ein besonderes Anliegen war, u. a. zur Erzielung einer hohen Reproduzierbarkeit, ab initio die für eine bestimmte Flächenbelegung der Wirkstoffteilchen erforderlichen Emulgatormengen mit dem Wirkstoff gezielt in Kontakt zu bringen und die mechanische Energie hierauf abzustimmen. Dies setzte ein Verfahren mit mathematisch exakt beschreibbaren Emulgiergeräten voraus. Nicht geeignet sind Geräte, die einem starken Einfluß der Verweilzeit unterliegen (z. B. Rühraggregate usw.).

Letztlich sollte die einzutragende Energie einen weiten - bislang nur durch mehrere Geräte unterschiedlicher Konstruktion erreichbaren- Bereich überstreichen. Damit können in der gleichen Anlage Emulsionen hergestellt werden, die vor einem hohen Energieeintrag zu schützen sind - z.B. Entschäumeremulsionen -, wie auch Emulsionen, die ein Vielfaches der von klassischen Homogenisatoren zur Verfügung gestellten Energie benötigen.

Die gestellte Aufgabe konnte durch eine Vorrichtung aus Vorratsgefäßen, Pumpen und Düsen bestehenden Anlage, die im folgenden als Mischstation bezeichnet wird, gelöst werden. Besonders vorteilhaft erwies sich, wenn dieser Mischstation ein Strahldispergator, wie er für die Herstellung von pharmazeutischen oder kosmetischen Dispersionen (Bayer AG / EP 0 101 007) beschreiben wurde, nachgeschaltet wurde.

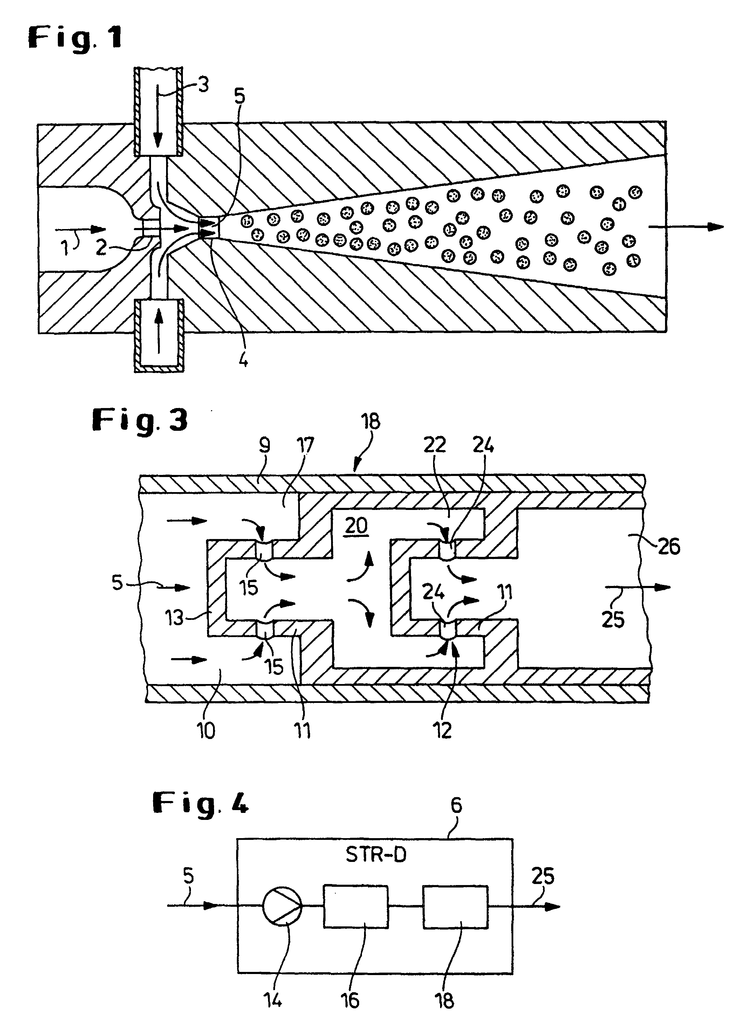

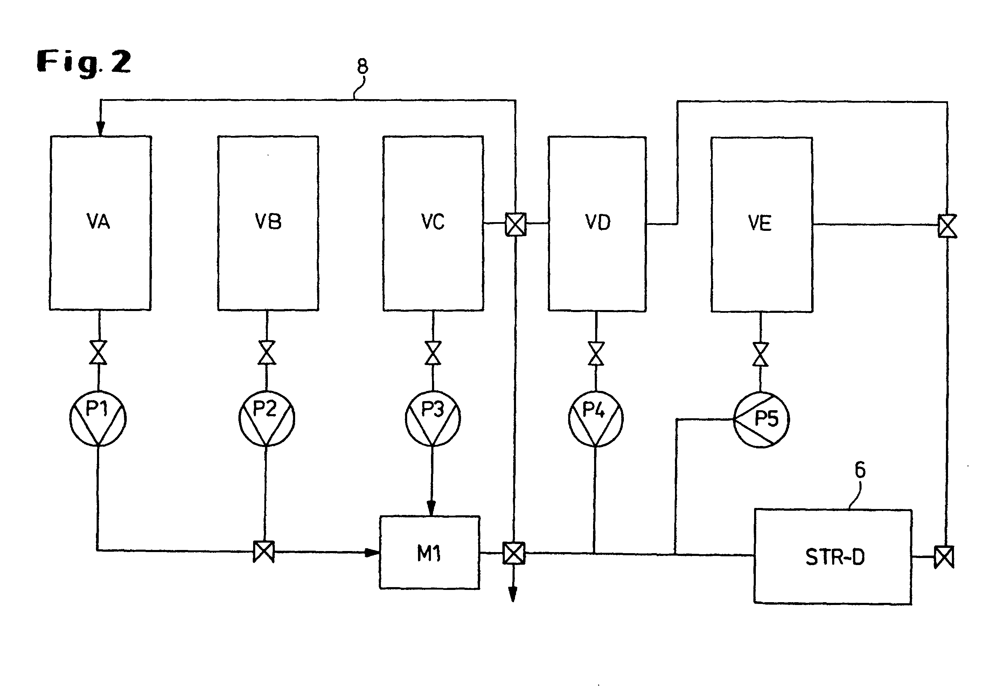

Gegenstand der Erfindung ist somit eine Vorrichtung zum Herstellen einer Silikon-, Silan- bzw. Silicon/Silanemulsion aus einer silicon- und /oder silanhaltigen Wirkstoffkomponente und einer wäßrigen Phase (Komponente), wie im Anspruch 1 definiert (Fig. 1 und 2).

Gegenstand der Erfindung ist weiterhin ein Verfahren zur Herstellung feinteiliger wäßriger Silicon- und /oder Silanemulsionen unter Verwendung der Vorrichtung nach Anspruch 1, wie im Anspruch 11 definiert.

Die vorliegende Erfindung wird durch die beigefügten Figuren und Beispiele näher erläutert.

Es zeigen:

Fig. 1                 eine Mischstation

Fig. 2                 eine schematische Darstellung der erfindungsgemäßen Vorrichtung mit einem Hochdruckhomogenisator

Fig. 3                 die Düsenanordnung eines Strahldispergators,

Fig. 4                 einen Hochdruckhomogenisator,

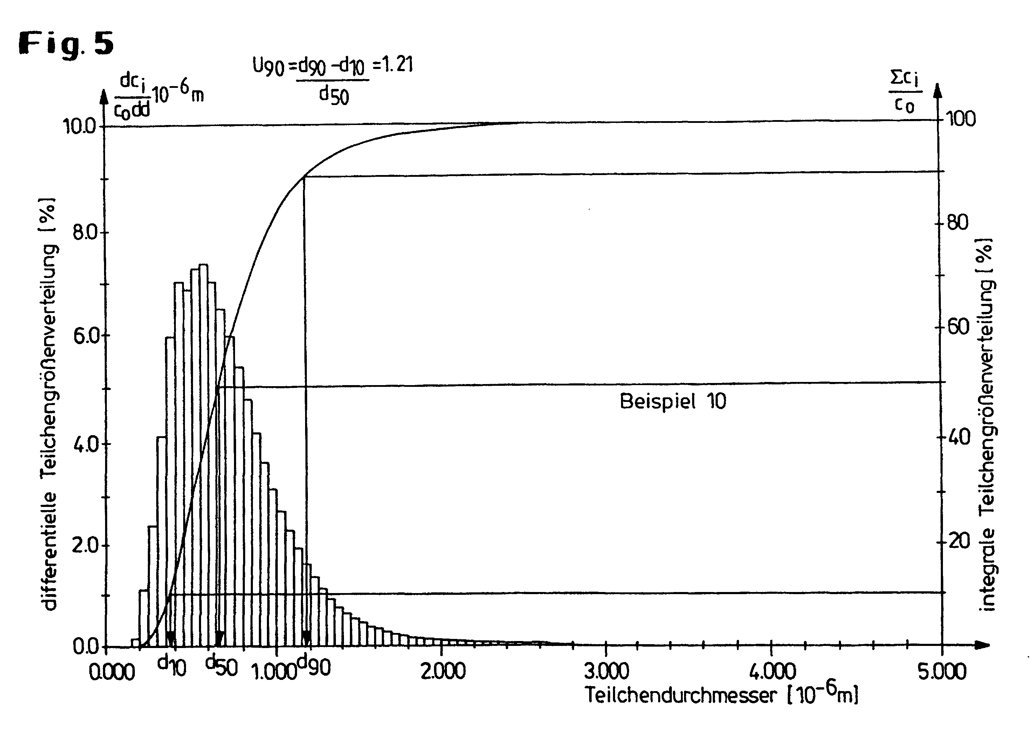

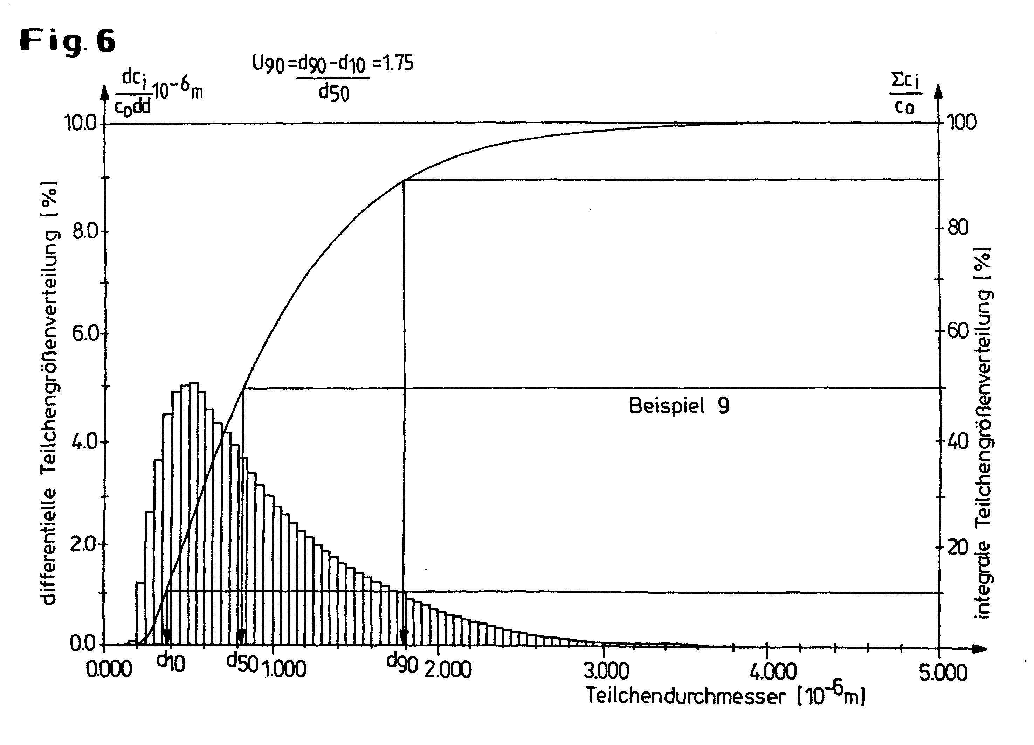

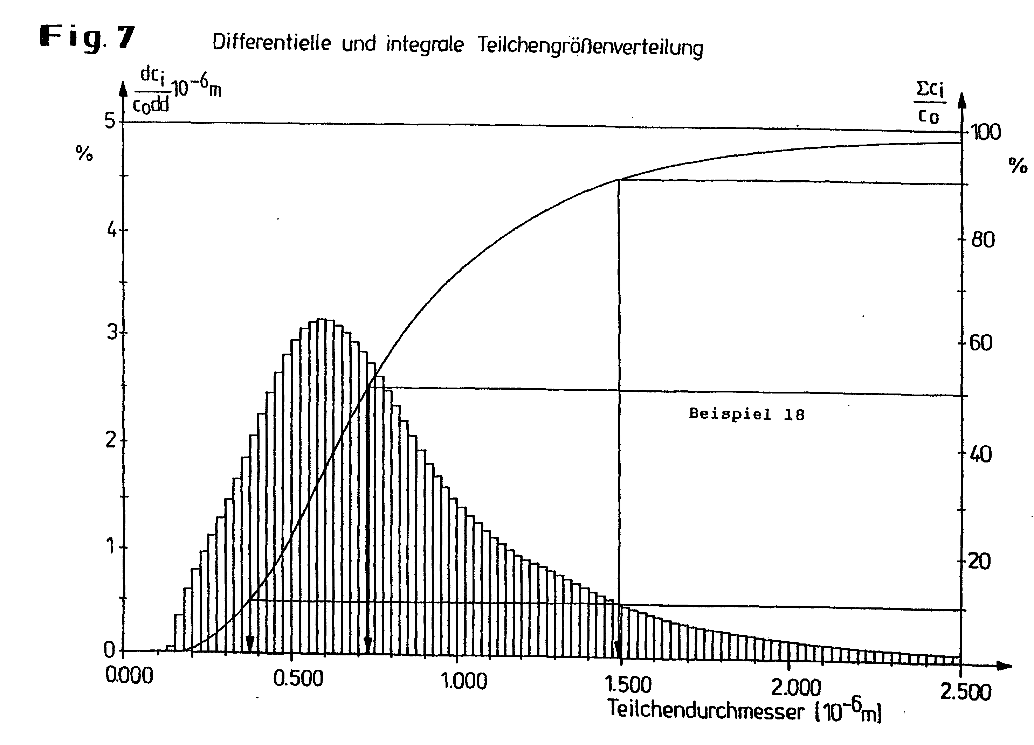

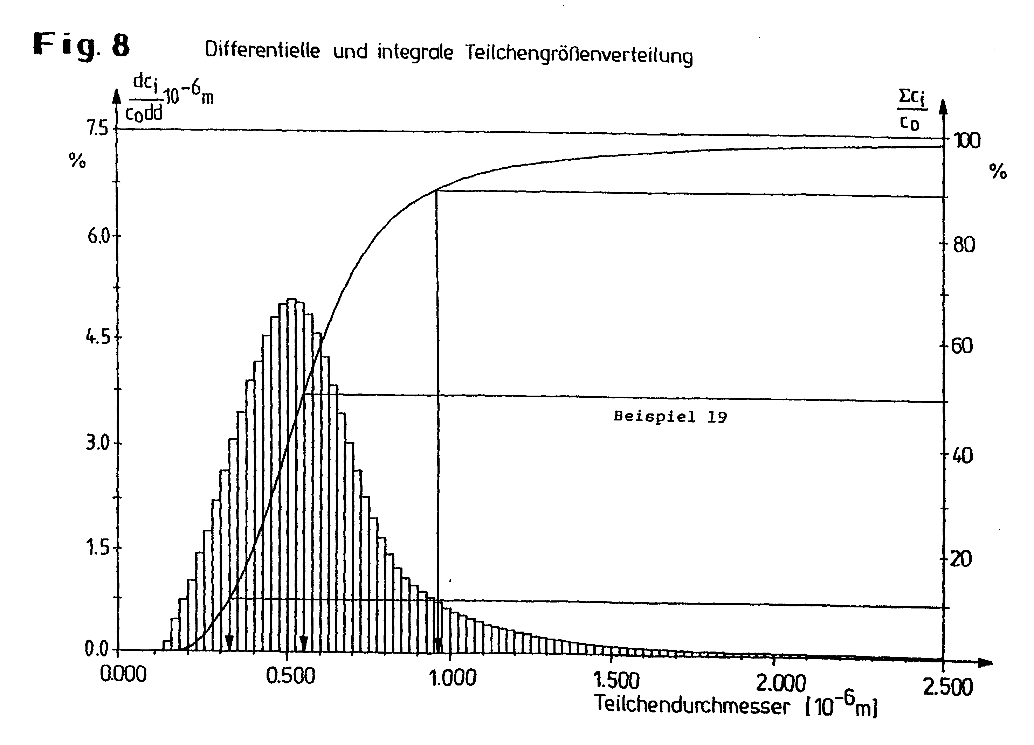

Fig. 5, 6, 7 und 8     die differentielle und integrale Teilchengrößenverteilung aus Beispiel 10, 9, 18 und 19.

In der erfindungsgemäßen Vorrichtung läßt sich bei bekanntem Druckabfall$(\Delta p)^{STR-D}$, bekanntem Gehalt und Oberflächenbedarf des Emulgators, bekanntem Düsendurchmesser $(D)^{STR-D}$, bekannter Grenzflächenspannung $(y)$, bekannter Viskosität $(\eta)$ der dispersen Phase und bekannter Anzahl der Durchläufe $(n)^{STR-D}$ die zu erwartende mittlere Teilchengröße $(d)$ berechnen, und zwar nach der folgenden Formel:

$$d = k \, A \, (\Delta p)^{-0,6} \, A \, \eta^{0,495} \, A \, \gamma^{0,365} \, A \, D^{0,165} \, A \, n^{0,36}$$

k = Konstante (betr. Emulgatorgehalt/Oberflächenbedarf)

Kernstück der Mischstation ist eine Düseanordnung in einer Mischeinrichtung M1, deren Dimensionen von der Konsistenz der beiden zu vereinigenden Phasen, deren Konzentration zueinander, dem gewählten Druckabfall und dem Durchsatz abhängt.

Fig. 1 zeigt eine mögliche Ausführungsform. Dabei wird z.B. das Siliconöl 1 über die erste Düse 2 in die wäßrige Phase 3 eingedüst und unmittelbar danach in der zweiten Düse 4 intensiv vermischt und homogenisiert. In dem nachgeschaltetem Strahldispergator STR-D erfolgt dann die endgültige Feinverteilung. Der Strahldispergator STR-D kann unmittelbar nachgeschaltet sein oder aber bei Batch-Fahrweise erst nach Herstellung der gesamten Voremulsion 5.

Die Düseanordnung nach Fig. 1 wird vorzugsweise über zwei Pumpen P1, P3 mit einem Druckunterschied von 2-3 bar so beschickt, daß im Falle -wo die Belegungsgeschwindigkeit des Emulgators es erlaubt- die wäßrige Emulgatorlösung und das Silicon in der endgültigen Emulsionskonzentration zusammengeführt werden und direkt über den Strahldispergator STR-D in einem oder maximal drei Durchgängen homogenisiert wird.

Die Anzahl der Durchgänge ist in der Regel von der Art und dem Gehalt des Emulgators abhängig. Emulgatorgehalte im Bereich 3% machen -von Ausnahmen abgesehennur einen Durchgang erforderlich.

Liegen Emulgatoren vor, die die Oberflächen der entstandenen Teilchen bestimmter Siliconwirkstoffe nur relativ langsam belegen, kann das Verfahren so modifiziert werden, daß mit einem beliebigen Unterschuß an Wasser, das die gesamte Menge an Emulgator enthält gearbeitet wird. Die in diesem Falle konzentrierter anfallende Emulsion kann in die wäßrige Emulgatorlösung zurückgeführt und mit dieser wieder der Düse und dem zuströmenden Wirkstoff zugeführt werden, so daß ein Kreislauf entsteht. Ob nach der erfolgten Vereinigung der Kreislauf noch einige Minuten aufrechterhalten bleibt, hängt von der Konzentration und Art des Emulgators, sowie von dem zu emulgierenden Silicon ab. Über eine weitere Düse und Pumpe kann dem Kreislauf der Rest des gegebenenfalls mit weiteren Zusätzen z.B. Verdickungsmitteln oder Konservierungsmitteln versetzten Wassers zugegeben werden, bevor diese Voremulsion dem Strahldispergator STR-D zugeführt wird.

Fig. 4 zeigt den Strahldispergator STR-D, der als Hochdruckhomogenisator 6 verwendet wird. Der Strahldispergator STR-D besteht im einzelnen aus einer Pumpe 14, gegebenenfalls einem Pulsationsdämpfer 16 und einer Düsenanordnung 18, die im Detail in Fig. 3 dargestellt ist. Die zweistufige Düsenanordnung 18 weist eine erste Düse 10 sowie eine dahinter geschaltete zweite Düse 12 auf, mit deren Hilfe die Voremulsion 5 homogenisiert wird. Jede Düse 10, 12 besteht aus einem Einsatzteil 11 in einem Rohr 9, wobei jedes Einsatzteil 11 einen entgegen der Strömungsrichtung der Voremulsion 5 vorstehenden zylindrischen Abschnitt 13 mit zwei gegenüberliegenden Kapillarbohrungen 15 aufweist. Der zylindrische Abschnitt 13 bildet einen Ringraum 17 in dem Rohr 9, wobei die Voremulsion 5 durch das Rohr 9 in den Ringraum 17 und von dort durch die Kapillarbohrungen 15 in eine Zwischenkammer 20 strömt. Da sich die Kapillarbohrungen 15 gegenüberstehen, prallen die austretenden Emulsionsstrahlen im Innern des zylindrischen Abschnitts 13 aufeinander. Hierdurch wird eine besonders gute Dispergierung erreicht. Die Emulsion strömt aus der Zwischenkammer 20 in einen zweiten Ringraum 22 der zweiten Düse 12 und tritt dort erneut durch die Kapillarbohrungen 24 der zweiten Düse 12. Die homogenisierte Emulsion 25 tritt durch den Auslauf 26 aus dem Strahldispergator STR-D aus.

Das vorliegende Verfahren erlaubt es auch, daß das Verhältnis des -den gesamten Emulgator enthaltenden- Wassers zum Wirkstoff so gewählt werden kann, daß auch Gele und Pasten entstehen. Voraussetzung ist, daß die gewählten Pumpen zwangsfördernd sind und die Konsistenz der Pasten beherrschen.

Vorteil des vorliegenden Verfahrens ist, daß es praktisch kontinuierlich arbeiten kann, wenig zeitaufwendig ist und eine hervorragende Reproduzierbarkeit besitzt. Es liefert stabile Emulsionen deren mittleren Teilchengrößen, bei Emulgatorgehalten im Bereich von 0.5 - 3 %, bei Werte < 1 µm liegen. Dabei liegt die für die Stabilität und für viele Anwendungen wichtige Verteilung der Teilchengrößen in einem engeren Bereich als bei den klassischen Verfahren.

Es gibt jedoch auch einige wenige Fälle, wo wenig stabile Emulsionen anfallen, bei denen sowohl Teilchengröße, wie auch deren Verteilung keine maßgebliche Rolle spielen, so daß aus Kosten- oder andern Gründen nach dem Durchgang durch die Mischstation auf eine nachfolgende Homogenisierung verzichtet wird. Die mangelnde Stabilität dieser Emulsionen kann in solchen Fällen durch eine wesentliche Erhöhung der Emulsionsviskosität durch Zugabe eines neutralen Verdickungsmittel kompensiert werden. Wegen der oftmaligen schlechten Weiterverarbeitbarkeit solcher Emulsionen, versucht man in der Regel diese Herstellmethode zu umgehen.

Unter obigen Emulsionen findet man wiederum einige wenige Emulsionen hoher Viskosität, in denen ein unverzichtbarer hochviskoser Wirkstoff -z. B. organischer Naturfür diese verantwortlich ist.

In derartigen Fällen wäre es natürlich unwirtschaftlich solche Emulsionen nachträglich zusätzlich im Strahldispergator STR-D zu emulgieren, weil -sollte der derzeitige Zustand der Emulsion im wesentlichen beibehalten werden- der Strahldispergator, unter den hierzu notwendigen Verfahrensbedingungen, keinen signifikanten Beitrag zur Verbesserung der physikalischen Eigenschaften der Emulsion leisten könnte.

Hier empfiehlt es sich die, die Mischstation verlassende Voremulsion in einer zweiten Mischstation mit höherem Druck z.B. bis zu 100 bar zu homogenisieren.

Diese Methode empfiehlt sich ebenfalls, wenn leicht zu emulgierende Si-Verbindungen mit Emulgatoren, die eine ausreichende Geschwindigkeit bei der Belegung der Teilchenoberflächen aufweisen, zu emulgieren sind. In diesem Falle kann auf Verdickungsmittel verzichtet werden.

Um den apparativen Aufwand zu minimieren wird jedoch vorgezogen, die Voremulsion in einen der ersten Mischstation vorgeschalteten Vorratsbehälter zu überführen und von dort über die gleiche Mischstation unter anderen Druckbedingungen in den gewünschten Emulsionszustand zu bringen.

Eine bevorzugte Ausführungsform der Erfindung ist somit desweiteren ein Verfahren zur Herstellung fein- bis grobteiliger wäßriger Silicon- und/oder Silanemulsionen im Bereich von ca. 0,4 bis 5,0 µm mit einem $U_{90}$-Wert größer 1,1 (d. h. breiterer Teilchenverteilung), die nur geringe Scherkräfte zur Emulgierung benötigen bzw. durch Verdickungsmittel stabilisiert werden, umfassend

- die Herstellung einer Voremulsion durch Injizieren der Silicon- und/oder Silankomponente in eine Emulgator enthaltende wäßrige Phase in einer Mischstation, wobei eine von den Düsendimensionen abhängige Druckdifferenz von maximal 10 bar zwischen beiden Strömen bei einem absoluten Druckabfall von unter 80 bar aufrechterhalten wird,

- die Homogenisierung der Voremulsion in einer nachgeschalteten Mischstation oder zeitlich versetzt in der gleichen Mischstation bei einem absoluten Druckabfall bis zu 100 bar.

Eine Ausführungsform ergibt sich aus Fig. 2, in der

VA: Behälter Wirkstoff
VB: Behälter Restwasser (+ Zuschläge)
VC: Puffergefäß/Zwischenbehälter
VE: Vorratsbehälter / Zwischenbehälter
P1, P2: Pumpen (ggf. zwangsfördernd)
P3, P4, P5: Pumpen
M1: Mischdüse Wirkstoff / Wasser
STR-D: Strahldispergator

bedeuten.

In den Wirkstoffkreislauf VA→P1→M1→VA wird bei niedrigem Druck die Wasserphase über VC→P3→M1 eingedüst und nach vollendeter Zugabe der Kreislauf VA→P1→M1→VA auf höheren Druck geschaltet, wobei M1 als nachgeschalteter Homogenisator dient. Die Emulsion kann hinter M1 abgenommen werden.
Voraussetzung ist natürlich, daß die Emulgatoren eine genügend hohe Teilchenbelegungsgeschwindigkeit aufweisen, eine Eigenschaft, die auch von der Akzeptanz des Wirkstoffes, diese Emulgatoren anzulagern, abhängig ist.

Beispiele für die Silicon- und Silankomponente sind

- Siliconverbindungen der üblichen Zusammensetzung:

$$(CH_3)_3SiO[(CH_3)_2SiO]_{50\text{-}500}Si(CH_3)_3$$

$$HO(CH_3)_2SiO[(CH_3)_2SiO]_{500}Si(CH_3)_2OH$$

$$(CH_3)_3SiO[(CH_3)(H)SiO]_{50}Si(CH_3)_3$$

$$(CH_3)_3Si(O)_{1.1}(OCH_3)_{0.8};$$

- Organoalkoxysilane, deren Hydrolysate, z. B.:

$$CH_3(CH_2)_7Si(OEt)_3$$

$$CH_3(CH_2)_3Si(OEt)_3$$

$$CH_3(CH_2)_{11\text{-}13}(CH_3)Si(OMe)_2$$

$$CH_3(CH_2)_7Si(OEt)_2O(OEt)_2Si(CH_2)_7CH_3$$

$$CH_3(CH_2)_3Si(OEt)_2[O(EtO)Si(CH_2)_3CH_3]_{0\text{-}5}\ OSi(OEt)_2(CH_2)_3CH_3;$$

- lineare Polyorganosiloxane mit und/oder ohne siliciumfunktionellen gebundene Gruppen wie Wasserstoff, Alkoxy-, Polyether- bzw. Hydroxygruppen, mit und/oder ohne organofunktionell angebundenen Gruppen wie Polyether, Amine oder Halogene bzw. Pseudohalogene, z.B.:

$$(CH_3)_3SiO[(CH_3)_2SiO]_{50\text{-}500}Si(CH_3)_3$$

$$HO(CH_3)_2SiO[(CH_3)_2SiO]_{500}Si(CH_3)_2OH$$

$$(CH_3)_3SiO[(CH_3)(H)SiO]_{50}Si(CH_3)_3$$

$$(CH_3)_3SiO[(CH_3)CH_2=CHSiO]_3\ [(CH_3)_2SiO]_{50\text{-}500}Si(CH_3)_3$$

$$(CH_3)_3SiO[CH_3(OCH_2CH_2)_8O(CH_2)_3(CH_3)SiO]_3[(CH_3)_2SiO]_{600}Si(CH_3)_3$$

- verzweigte Polyorganosiloxane mit und/oder ohne angebundene siliciumfunktionellen Gruppen wie Wasserstoff, Alkoxy-, Polyether- bzw. Hydroxygruppen, mit und/oder ohne organofunktionell angebundenen Gruppen wie Polyether, Amine oder Halogene bzw. Pseudohalogene, z.B.:

$$CH_3\ Si\{[(CH_3)_2SiO]_{50}OSi(CH_3)_3\}_3$$

$$CH_3\ Si\{[(CH_3)_2SiO]_{80}OSi(CH_3)_2CH_2=CH_3\}_3$$

$$CH_3\ Si\{[(CH_3)_2SiO]_{90}OSi(CH_3)_2(CH_2)_3(OCH_2CH_2)_3OCH_3\}_3$$

$$H_2N(CH_2)_3Si\{[(CH_3)_2SiO]_{18}OSi(CH_3)\}_3;$$

- Siliconharze mit Aryl-, Alkyl- organofunktionell modifizierten Alkylgruppen, Alkoxyfunktionelle Harze, mit oder ohne Verdünnungsmittel, z.B.:

$$(CH_3)_{1.16}Si_1O_{1.42}$$

$$(CH_3)_{0.8}(C_{12}H_{25})_{0.2}Si(O)_1(OCH_3)_1$$

$$(SiO_2)_{10}[(CH_3)_3SiO_{1/2}]_{0.8}$$

$$SiO_2[(CH_3)CH_2=CHSiO]_{0.3}[O_{1/2}Si(CH_3)_3]_{1.2}$$

- Gemische obiger Komponenten untereinander oder mit unlöslichen Zuschlägen mineralischer oder organischer Art.

Unter Emulgatoren werden ionische und nichtionische Emulgatoren, wie sie in der Siliconemulgierung üblich sind bzw. deren Gemische verstanden.

Als ionische Emulgatoren eignen sich, je nach Wirkstoff z.B.

- Alkylsulfonate mit 8 bis 18 C-Atomen mit oder ohne Ethylen- bzw. Propylenoxideinheiten;

- Sulfatester wie z. B. $CH_3(CH_2)_6CH_2O(C_2H_4O)_{6\text{-}19}SO_3H$;

- Alkylarylsulfonate, wie z. B. Dodecylbenzolsulfonat;

- Quaternäre Ammoniumverbindungen, wie z. B. Dodecyltrimethylammoniumhydroxid, Octyldimethylbenzylammoniumhydroxide bzw. deren Salze.

Vorgezogen werden allerdings nichtionische Emulgatoren deren HLB-Wert im Bereich von 10 bis 16 liegt. Liegen Gemische dieses Bereiches vor können diese aus Kombinationen von Emulgatoren mit einem HLB-Wert zwischen 2.7 und 18.7 bestehen.

Als nichtionische Emulgatoren eignen sich Ethylenoxid-Addukte an Fettalkohole, Alkylphenole, Triglyceride oder Zucker, Polyethylenoxidsorbitanlaurate, -palmitate, -stearate; Etylenoxid-Addukte an Alkylamine; und Polyvinylalkohole (wie Mowiol), insbesondere Ethoxidaddukte an Tridecylalkohol, Ethoxidaddukte an Sorbitan monooleate (Tween®-Produkte der ICI), Sorbitan monooleate und deren Gemische.

Der mittlere Teilchendurchmesser - im Text auch als Teilchengröße bezeichnet- errechnet sich aus dem Volumenmittel, das sich aus dem Gesamtvolumen aller Teilchen der Emulsion, dividiert durch die Anzahl der Teilchen, ergibt.

Der Zahlenwert der Breite der Teilchengrößenverteilung wurde so errechnet, daß von der gegebenen Teilchenmenge die Teilchen mit den kleinsten Durchmessern bis zu einer Menge von 10 Gew.-% der Teilchenmenge (d10) und die Teilchen mit den größten Durchmessern bis zu einer Menge von 10 Gew.-% der Teilchenmenge (d90) unberücksichtigt bleiben und die Differenz der Durchmesser des verbleibenden größten Teilchens und des verbleibenden kleinsten Teilchens dividiert wird durch den Durchmesser desjenigen Teilchens (d50) das größer ist als 50 Gew.-% aller Teilchen und kleiner als 50 Gew.-% aller Teilchen. Dieser Zahlenwert wird im folgenden $U_{90}$ genannt:

$$U_{90} = \frac{d90 - d10}{d50}$$

(s. Fig. 5, 6, 7 und 8).

Die mittleren Teilchengrößen wurden durch Frauenhofer-Beugung, Ultrazentifugation oder durch Photometrie mit Hilfe der Mie-Theorie gemessen. Die Verteilungskurven wurden mittels der Ultrazentrifuge gemessen.

Die in der Anlage in einem schematischen Fließbild gezeigte Apparatur (Fig. 2) erlaubt flexibel auf den Wirkstoff, den Emulgator und deren Konzentrationen abgestimmte Verfahrensanpassungen.

So kann z. B. im günstigen Fall, wenn leicht zu emulgierende Produkte vorliegen, der Emulgator "schnell" ist und in günstiger Konzentration vorliegt, der Wirkstoff (aus VA) mit dem Wasser/Emulgator-Gemisch (aus VC) im gewünschten Verhältniss in M1 zusammengeführt werden und die entstandene Voremulsion direkt oder über ein Puffergefäß (VD) dem Strahldispergator STR-D zugeführt, in einem Durchgang homogenisiert und anschließend zur Abfüllstation geleitet werden.

Diese Vorgehensweise erfordert eine zuverlässige Steuerung bzw. Synchronisation der Pumpen untereinander. Soll auf eine solche verzichtet werden und ist ein genaues Verhältnis Emulgator/Wirkstoff bei der Zusammenführung in M1 nicht unbedingt erforderlich, kann um trotzdem die erforderliche Wirkstoffkonzentration in der Emulsion zu gewährleisten der Wirkstoff einem berechneten Unterschuß an Wasser/Emulgator über M1 zugeführt werden, die entstandene Voremulsion laufend zu dem Wasser/Emulgator-Gemisch (nach VC) zurückgeführt und im Kreislauf über M1 wieder mit dem Wirkstoff zusammengeführt werden. Ist der gesamte Wirkstoff verbraucht, wird die Voremulsion über die Düse M1 durch Zugabe des restlichen Wassers (aus VB) -über einen ähnlichen wie eben beschriebenen Kreislauf (M1→VC→M1) auf die endgültige Konzentration gebracht und wie oben homogenisiert.

Im Falle schwierig zu emulgierender Wirkstoffe, "langsamer" Emulgatoren oder sehr geringer Konzentrationen an Emulgatoren, kann vor der Zuführung zu STR-D ein paar Mal über VC und M1 im Kreis voremulgiert werden, bevor wie oben verfahren wird.

Wird Wert auf eine Paste bzw. ein Gel gelegt und ist der Wirkstoff hierfür geeignet, so kann er mit einem beliebigen Unterschuß an Wasser (aus VC)-jedoch dem gesamten Emulgator- in M1 zusammengeführt werden, die entstandene Emulsion, wie oben, nach VC zurückgeführt werden und mit dessen Inhalt immer wieder über M1 mit dem Wirkstoff verdüst werden. Dabei entsteht eine hochviskose Voremulsion die je nach gewählten Verhältnissen Pasten- bzw. Gelkonsistenz aufweisen kann.

Diese kann - je nach Anwendungszweck - als solche abgefüllt, oder wie nachstehend beschrieben, weiter bearbeitet werden.

Sie wird bevor sie oben in STR-D homogensiert wird, über M1 geführt, wo das restliche Wasser (aus VB), ggfs. mit Verdickungsmittel und anderen üblichen Zusätzen eingedüst wird, so daß die berechnete Zusammensetzung erreicht wird.

Sind mehr als ein Durchgang durch STR-D erforderlich, kann ein weiteres Mal über VE →STR-D im Kreis gefahren werden, bevor die Emulsion abgefüllt wird.

Wünscht man jedoch mehrere diskrete Durchgänge kann aus dem Puffergefäß VD über STR-D in einem 1. Durchgang nach VE emulgiert werden, nach Beendigung von dort in einem 2. Durchgang über STR-D wiederum nach VD usw.

In den folgenden Beispielen beziehen sich alle Angaben, wenn nicht anderes angegeben wird, auf das Gewicht.

Folgende Abkürzungen werden verwendet:

| Me- | $-CH_3$ |
|------|---------|
| Et | $-C_2H_5$ |
| Octeo | $C_8H_{17}Si(OEt)_3$ |
| V | Voremulsion |

In den Tabellen wird nur der Zeitbedarf für die Herstellung der Voremulsion angegeben, da die Vorbereitungen der Wasseremulgatorgemische bei erfindungsgemäßen und nicht erfindungsgemäßen Beispielen praktisch gleich sind. Der eigentliche Homogenisierschritt wurde ebenfalls nicht in die Zeitbetrachtung einbezogen, da er weitestgehend von der Kapazität der im Vergleich stehenden Emulgiergeräte abhängig ist.

In den Tabellen sind die erfindungsgemäßen Beispiele fett, die Vergleichsbeispiele kursiv gedruckt.

## Beispiele

### A. Harzemulsionen

### Beispiel 1 (Vergleichsbeispiel)

238,7 g destilliertes Wasser wurden in einem 21 - Gefäß auf 60 °C erwärmt und unter Rühren mit 55 g eines aufgeschmolzenen Gemisches -entsprechend 2,50 % bezogen auf den Gesamtansatz- aus einem POE - Stearylalkohol und einem POE - Cetylalkohol mit dem gesamten HLB - Wert von 15,5 versetzt.

Nach Abkühlung auf 40 °C wurden 1447,6 g einer Isopar® G - Lösung mit 80 % Harz der mittleren Zusammensetzung $(CH_3)_{1,16}$ $Si_1$ $O_{1,42}$ und einer Viskosität von 1620 mPaAs bei einer Rührgeschwindigkeit von 250 - 400 U/min innerhalb einer Stunde zugegeben. Es wurde 10 min mit einer Rührgeschwindigkeit von $\sim$ 400 U/min nachgerührt. Innerhalb von 25 min wurden 458,7 g einer wäßrigen Lösung von 1,76 g Carboxymethylzellulose (Walocel CRT 5000 GA) unter Rühren zugegeben. Es wurde 40 min nachgerührt.

Die Voremulsion wurde bei einem Druckabfall von ∆P = 250 bar in einem klassischen Hochdruckhomogenisator des Typs Gaulin in sechs Durchgängen homogenisiert. Die Ergebnisse sind in Tabelle 1 aufgeführt.

### Beispiel 2 (Vergleichsbeispiel)

Beispiel 1 wurde mit einem Gesamtemulgatorgehalt von 3,00 %. wiederholt. Die Ergebnisse sind in Tabelle 1 aufgeführt.

### Beispiel 3

Der gleiche Ansatz wie in Beispiel 1 - jedoch mit 2,2 % Emulgatorgemisch - wurde um den Faktor 2,7273 vergrössert. 645,0 g destilliertes Wasser wurden in VC (s. Anhang Fig. 2) auf 50 °C erwärmt und unter Rühren mit 133 g eines aufgeschmolzenen Gemisches -entsprechend 2,20 % bezogen auf den Gesamtansatz- aus einem POE - Stearylalkohol und einem POE - Cetylalkohol mit dem gesamten HLB - Wert von 15,5 versetzt und über P3 mit 3 bar durch M1 (Düsendurchmesser 2,1/1,0 mm) nach VC gedrückt und 30 s über P3 durch M1 nach VC im Kreis gefahren. In diesen Kreislauf wurden innerhalb von 17 min 3948 g des gleichen Harzes wie in Beispiel 1 aus VA über P1 mit 5 bar in M1 eingedüst. Anschließend wurde der Kreislauf 10 min aufrechterhalten, dann aus VB über M1 eine wäßrige Lösung von 4,8 g Carboxymethylzellulose (Walocel CRT 5000 GA) in 1264,2 g Wasser innerhalb von 9 min in den Kreislauf eingedüst. Nach abgeschlossener Zugabe wurde der Kreislauf noch 40 min aufrechterhalten, bevor die Voremulsion bei einem Druckabfall von ∆P = 250 bar im Strahldispergator STR-D (Düsendurchmesser: 0,2828 mm) in drei Durchgängen homogenisiert wurde. Die Ergebnisse sind in Tabelle 1 aufgeführt.

### Beispiel 4

Beispiel 3 wurde mit einem Gesamtemulgatorgehalt von 2,5 % wiederholt. Die Ergebnisse sind in Tabelle 1 aufgeführt.

### Beispiel 5

Beispiel 3 wurde mit einem Gesamtemulgatorgehalt von 2,8 % wiederholt. Die Ergebnisse sind in Tabelle 1

aufgeführt.

**<u>Beispiel 6</u>**

Beispiel 3 wurde mit einem Gesamtemulgatorgehalt von 3,0 % wiederholt. Die Ergebnisse sind in Tabelle 1 aufgeführt.

Tabelle 1

| Durchgang Nr. | ←Beispiel→ | | | | | | Teilchengröße Ø [µm] ←Beispiel→ | | | | | | Stabilität [Monate] ←Beispiel→ | | | | | |
|---|---|---|---|---|---|---|---|---|---|---|---|---|---|---|---|---|---|---|
|  | 1 | 2 | 3 | 4 | 5 | 6 | 1 | 2 | 3 | 4 | 5 | 6 | 1 | 2 | 3 | 4 | 5 | 6 |
|  | V | V | V | V | V | V | >5,000 | >5,000 | >5,000 | >5,000 | 5,000 | >5,000 | 0 | 0 | 0 | 0 | 0 | 0 |
|  | 1 | 1 | 1 | 1 | 1 | 1 | 4,954 | 4,760 | 2,915 | 2,550 | 2,453 | 2,106 | / | / | / | / | / | / |
|  | 2 | 2 | 2 | 2 | 2 | 2 | 4,687 | 4,487 | 2,143 | 0,653 | 0,660 | 0,634 | 0,5 | 0,5 | >6 | >6 | >6 | >6 |
|  | 3 | 3 | 3 | 3 | 3 | 3 | 4,423 | 4,390 | 1,617 | 0,642 | 0,593 | 0,589 | 0,5 | 0,5 | >6 | >6 | >6 | >6 |
|  | 4 | 4 |  |  |  |  | 4,343 | 4,202 |  |  |  |  | 0,5 | 0,5 |  |  |  |  |
|  | 5 | 5 |  |  |  |  | 4,216 | 4,068 |  |  |  |  | 0,5 | 0,5 |  |  |  |  |
|  | 6 | 6 |  |  |  |  | 4,094 | 3,989 |  |  |  |  | 0,5 | 0,5 |  |  |  |  |

### B. Harz/Silan (wasserempfindlich) - Emulsionen

**Beispiel 7** (Vergleichsbeispiel)

22 g Emulgatorgemisch - entsprechend 1 Gew.-%, bezogen auf den Gesamtansatz - aus einem ethoxylierten Sorbitan Monolaurat und einem ethoxylierten Oleylalkohol mit einem Gesamt-HLB-Wert von 15,3 wurden in einem 4-Liter Rührgefäß mit 816,22 g Wasser und 2,18 g Diethanolamin versetzt und 2 Stunden bei 80 °C gerührt, wobei eine klare Lösung entstand. Zu der abgekühlten Lösung wurden innerhalb 65 min bei einer Rührgeschwindigkeit von 700 U/min 1359,6 g eines Gemisches aus 49,2 % Octyltriethoxysilan und 50,8 % eines Harzes der Zusammensetzung $(CH_3)_{0,8} (C_{12}H_{25})_{0,2} Si(O)_1(OCH_3)_1$ zugegeben. Nach vollendeter Zugabe wurde 30 min bei 550 U/min weitergerührt. Eine Probe zur Teilchengrößenbestimmung wurde nach 30 min entnommen. Die Voremulsion wurde bei einem Druckabfall von $\Delta P = 250$ bar in einem klassischen Homogenisator des Typs Gaulin in 2 Durchgängen homogenisiert. Die Ergebnisse sind in Tabelle 2 aufgeführt.

### Beispiel 8

Der Ansatz aus Beispiel 7 wurde verdoppelt. 44 g Emulgatorgemisch - entsprechend 1 Gew.-%, bezogen auf den Gesamtansatz - aus einem ethoxylierten Sorbitan Monolaurat und einem ethoxylierten Oleylalkohol mit einem Gesamt-HLB-Wert von 15,3 wurden in VC (s. Fig. 2) mit 1632,44 g Wasser und 4,36 g Diethanolamin versetzt und 2 Stunden bei 80 °C gerührt, wobei eine klare Lösung entstand. Nach Abkühlung wurde eine Minute bei 3 bar im Kreis VC→P3→M1→VC gepumpt. In diesen Kreislauf wurden aus VA über P1 und und durch M1 (Düsendurchmesser: 2,1/1,0 mm) innerhalb von 3,5 min, 2719,2 g eines Gemisches aus 49,2 % Octyltriethoxysilan und 50,8 % eines Harzes der Zusammensetzung $(CH_3)_{0,8}(C_{12}H_{25})_{0,2} Si(O)_1(OCH_3)_1$ bei 5 bar eingedüst. Nach vollendeter Zugabe wurde der obige Kreislauf noch 15 min bei 3 bar aufrechterhalten. Eine Probe zur Teilchengrößenbestimmung wurde nach 5 und 15 min entnommen. Die Voremulsion wurde in 2 Durchgängen bei einem Druckabfall von $\Delta P = 100$ bar homogenisiert. Die Ergebnisse sind in Tabelle 2 aufgeführt.

**Beispiel 9** (Vergleichsbeispiel)

22.g Emulgatorgemisch - entsprechend 1 Gew.-%, bezogen auf den Gesamtansatz - aus einem ethoxylierten Sorbitan Monolaurat und einem ethoxylierten Oleylalkohol mit einem Gesamt-HLB-Wert von 15,3 wurden in einem 4-Liter Rührgefäß mit 163,2 g Wasser und 2,18 g Diethanolamin versetzt und 2 Stunden bei 80 °C gerührt, wobei eine klare Lösung entstand. Zu der abgekühlten Lösung wurden innerhalb 65 min bei einer Rührgeschwindigkeit von 700 U/min 1359,6 g eines Gemisches aus 49,2 % Octyltriethoxysilan und 50,8 % eines Harzes der Zusammensetzung $(CH_3)_{0,8} (C_{12}H_{25})_{0,2} Si(O)_1(OCH_3)_1$ zugegeben. Nach vollendeter Zugabe wurde 15 min bei 550 U/min weitergerührt, wobei eine höherviskose Paste entstand. Bei vorhergehender Rührgeschwindigkeit wurden innerhalb 30 min 653,0 g Wasser zugegeben und solange nachgerührt, bis die Teilchengröße unter 5 µm gesunken war (45 min). Die Voremulsion wurde bei einem Druckabfall von $\Delta P = 200$ bar in einem klassischen Homogenisator des Typs Gaulin in 2 Durchgängen homogenisiert. Die Ergebnisse sind in Tabelle 2 aufgeführt.

### Beispiel 10

Der Ansatz aus Beispiel 9 wurde verdreifacht. 66 g Emulgatorgemisch - entsprechend 1 Gew.-%, bezogen auf den Gesamtansatz - aus einem ethoxylierten Sorbitan Monolaurat und einem ethoxylierten Oleylalkohol mit einem Gesamt-HLB-Wert von 15,3 wurden in VC (s. Fig. 2) mit 489,60 g Wasser und 6,54 g Diethanolamin versetzt und 2 Stunden bei 80 °C gerührt, wobei eine klare Lösung entstand. Nach Abkühlung wurde eine Minute bei 3 bar im Kreis VC→P3→M1→VC gepumpt. In diesen Kreislauf wurden aus VA über P1 und und durch M1 (Düsendurchmesser: 2,1/1,0 mm) innerhalb von 5 min 4078,8 g eines Gemisches aus 49,2 % Octyltriethoxysilan und 50,8 % eines Harzes der Zusammensetzung $(CH_3)_{0,8}(C_{12}H_{25})_{0,2} Si(O)_1(OCH_3)_1$ bei 5 bar eingedüst. Nach vollendeter Zugabe wurde der obige Kreislauf noch 4 min bei 3 bar aufrechterhalten. Anschließend wurden aus VB innerhalb von 10 min 1959 g Wasser über M1 in den obigen Kreislauf gedüst. Nach vollendeter Wasserzugabe, wurde die Voremulsion noch 1 min im Kreislauf vorhomogenisiert, eine Probe zur Ermittlung der Teilchengröße entnommen und in 2 Durchgängen bei einem Druckabfall von $\Delta P = 100$ bar im Strahldispergator homogenisiert. Die Ergebnisse sind in Tabelle 2 aufgeführt.

## Tabelle 2

| Durchgang Nr. | | | | Druckabfall ΔP [bar] | | | | Teilchengröße Ø [μm] | | | | Voremulsion Zeitbedarf [min] | | | | Verteilungsbreite $U_{90}$ | | | |
|---|---|---|---|---|---|---|---|---|---|---|---|---|---|---|---|---|---|---|---|
| Beispiel | | | | Beispiel | | | | Beispiel | | | | Beispiel | | | | Beispiel | | | |
| 7 | 8 | 9 | 10 | 7 | 8 | 9 | 10 | 7 | 8 | 9 | 10 | 7 | 8 | 9 | 10 | 7 | 8 | 9 | 10 |
| V | V | V | V | 0 | 3/5 | 0 | 3/5 | >5,000 | 3,773 | 4,241 | 4,371 | 95 | 20* | 110 | 21[+] | | | | |
| 1 | 1 | 1 | 1 | 250 | 100 | 200 | 100 | 1,766 | 0,647 | 0,763 | 0,632 | | | | | 2,03 | 1,21 | 1,75 | 1,21 |
| 2 | 2 | 2 | 2 | 250 | 100 | 200 | 100 | 0,707 | 0,609 | 0,548 | 0,583 | | | | | 1,32 | 1,02 | 1,21 | 1,10 |

\* bei doppeltem Ansatz

[+] bei dreifachem Ansatz

EP 1 023 118 B1

**Beispiel 11**

32 g Emulgatorgemisch - entsprechend 0,64 Gew.-%, bezogen auf den Gesamtansatz - aus einem ethoxylierten Sorbitan Monolaurat und einem ethoxylierten Oleylalkohol mit einem Gesamt-HLB-Wert von 15,3 wurden in VC (s. Fig. 2) mit 390,83 g Wasser und 3,17 g Diethanolamin versetzt und 2 Stunden bei 80 °C gerührt, wobei eine klare Lösung entstand. Nach Abkühlung wurde eine Minute bei 3 bar im Kreis VC→P3→M1→VC gepumpt. In diesen Kreislauf wurden aus VA über P1 und und durch M1 (Düsendurchmesser: 1,8/0,9 mm) innerhalb von 3 Min 1980 g eines Gemisches aus 49,2 % Octyltriethoxysilan und 50,8 % eines Harzes der Zusammensetzung $(CH_3)_{0,8}(C_{12}H_{25})_{0,2}$ Si $(O)_1(OCH_3)_1$ bei 5 bar eingedüst. Nach vollendeter Zugabe wurde der obige Kreislauf noch 2 min bei 3 bar aufrechterhalten. Anschließend wurden aus VB innerhalb von 13 min 2594 g Wasser über M1 in den obigen Kreislauf gedüst. Nach vollendeter Wasserzugabe wurde die Voremulsion noch 4 min im Kreislauf vorhomogenisiert, eine Probe zur Ermittlung der Teilchengröße entnommen und in 2 Durchgängen bei einem Druckabfall von $\Delta P$ = 95 bar im Strahldispergator homogenisiert. Die Ergebnisse sind in Tabelle 3 aufgeführt.

Tabelle 3

| Durchgang Nr. | Druckabfall $\Delta P$ [bar] | Teilchengröße $\emptyset$ [μm] | Voremulsion Zeitbedarf [min] | Emulgatorgehalt [%] | Emulsionsstabilität [Monate] |
|---|---|---|---|---|---|
| V | 3/5 | 4,326 | 25 | 0,64 | - |
| 1 | 95 | 0,621 | | | >6 |
| 2 | 95 | 0,611 | | | >6 |

**C. Siliconöl - Emulsionen**

**Beispiel 12**

150 g aufgeschmolzenes Emulgatorgemisch - entsprechend 3 Gew.-%, bezogen auf den Gesamtansatz - aus einem ethoxylierten Triglycerid und einem ethoxylierten Tridecylalkohol mit einem Gesamt-HLB-Wert von 13,5 wurden in VC (s. Fig. 2) mit 1850 g Wasser bei 50 °C versetzt und 2 min bei 3 bar im Kreis VC →P3→M1→VC gepumpt, abgekühlt und in diesen Kreislauf innerhalb von 18 min aus VA über P 1 mit 5 bar 3000 g eines Diorganopolysiloxans der Viskosität η = 350 mPaAs in M1 (Düsendurchmesser: 1,4/0,7 mm) eingedüst. Anschließend wurde bei einem Druckabfall von 250 bar in STR-D homogenisiert. Die Ergebnisse sind in Tabelle 4 aufgerührt.

**Beispiel 13**

200 g aufgeschmolzenes Emulgatorgemisch - entsprechend 4 Gew.-%, bezogen auf den Gesamtansatz - aus einem ethoxylierten Triglycerid und einem ethoxylierten Tridecylalkohol mit einem Gesamt-HLB-Wert von 15,4 wurden in VC (s. Fig. 2) mit 1550 g Wasser bei 45°C versetzt und 2 min bei 3 bar im Kreis (Düsendurchmesser: 1,4/0,7 mm) gepumpt, abgekühlt und in diesen Kreislauf innerhalb von 5,5 min aus VA über P1 bei 5 bar 1750 g eines Diorganopolysiloxans der Viskosität η = 350 mPas in M1 (Düsendurchmesser: 2,1/1,0 mm) eingedüst. Nach vollendeter Zugabe wurde noch 5 weitere Minuten bei 3 bar im Kreislauf gepumpt. Anschließend wurden 1500 g Wasser aus VB bei 5 bar innerhalb 8 Minuten über M1 eingedüst. Nach weiteren 5 min Kreislauf bei 3 bar wurde bei einem Druckabfall von 250 bar in STR-D homogenisiert. Die Ergebnisse sind in Tabelle 4 aufgeführt.

**Beispiel 14**

180 g aufgeschmolzenes Emulgatorgemisch - entsprechend 4,5 Gew.-%, bezogen auf den Gesamtansatz - aus einem ethoxylierten Triglycerid und einem ethoxylierten Tridecylalkohol mit einem Gesamt-HLB-Wert von 15,4 wurden in VC (s. Fig. 2) mit 1240 g Wasser bei 50 °C versetzt und 1 Minute bei 3 bar im Kreis VC →P3→M1→VC gepumpt, abgekühlt und in diesen Kreislauf innerhalb von 1,5 min aus VA über P1 mit 5 bar 800 g eines. Diorganopolysiloxans der Viskosität η = 350 mPaAs in M1 (Düsendurchmesser: 2,1/1,0 mm) eingedüst. Nach vollendeter Zugabe wurde noch 2 weitere Minuten bei 3 bar im Kreislauf gepumpt. Anschließend wurden 1780 g Wasser aus VB bei 5 bar innerhalb 8,5 min über M1 eingedüst und 2 min bei 3 bar im gleichen Kreislauf nachhomogenisiert. Anschließend wurde bei einem Druckabfall von 200 bar in STR-D homogenisiert. Die Ergebnisse sind in Tabelle 4 aufgeführt.

**Beispiel 15** (Vergleichsbeispiel)

90 g aufgeschmolzenes Emulgatorgemisch - entsprechend 4,5 Gew.-%, bezogen auf den Gesamtansatz - aus einem ethoxylierten Triglycerid und einem ethoxylierten Tridecylalkohol mit einem Gesamt-HLB-Wert von 15,4 wurden in in einem Rührgefäß mit 620 g Wasser bei 50 °C versetzt und 3 min gerührt, abgekühlt und unter Rühren innerhalb von 13 min 400 g eines Diorganopolysiloxans der Viskosität $\eta$ = 350 mPaAs über einen Tropftrichter zugegeben. Nach vollendeter Zugabe wurde noch 5 weitere Minuten bei 400 U/min weitergerührt, bevor innerhalb von 27 Minuten bei 300 U/min (starke Schaumbildung) 890 g Wasser zugegeben wurden. Die Voremulsion wurde bei einem Druckabfall von $\Delta$P = 200 bar in einem klassischen Homogenisator des Typs Gaulin in 2 Durchgängen homogenisiert. Die Ergebnisse sind in Tabelle 4 aufgeführt.

Tabelle 4

| Durchgang Nr. | | | | Teilchengröße Ø [µm] | | | | Voremulsion Zeitbedarf [min] | | | | Wirkstoff Konzentration [%] | | | | Emulsions-stabilität [Monate] | | | |
| --- | --- | --- | --- | --- | --- | --- | --- | --- | --- | --- | --- | --- | --- | --- | --- | --- | --- | --- | --- |
| Beispiel | | | | Beispiel | | | | Beispiel | | | | | | | | Beispiel | | | |
| 12[1] | 13[2] | 14[3] | 15[4] | 12 | 13 | 14 | 15 | 12 | 13 | 14 | 15 | 12 | 13 | 14 | 15 | 12 | 13 | 14 | 15 |
| V | V | V | V | - | - | - | - | 18 | 23,5 | 14 | 45 | 60 | 35 | 20 | 20 | - | - | - | - |
| 1 | 1 | 1 | 1 | 1,0 | 0,960 | 2,743 | 3,411 | | | | | 60 | 35 | 20 | 20 | >6 | >6 | 6 | - |
| 2 | 2 | 2 | 2 | 0,9 | 0,832 | 0,910 | 3,317 | | | | | 60 | 35 | 20 | 20 | >6 | >6 | 6 | - |
| 3 | 3 | 3 | 3 | 0,8 | 0,787 | 0,822 | 2,534 | | | | | 60 | 35 | 20 | 20 | >6 | >6 | 6 | <6 |
| | 4 | 4 | 4 | | 0,777 | 0,798 | 2,406 | | | | | | | | | | >6 | 6 | <6 |
| | | | | | | | 2,362 | | | | | | | | | | | | <6 |
| | | | | | | | 2,254 | | | | | | | | | | | | <6 |

[1] 5000 g Ansatz

[2] 5000 g Ansatz

[3] 4000 g Ansatz

[4] 2000 g Ansatz

EP 1 023 118 B1

**Beispiel 16**

2800 g Wasser, 4,6 g Salzsäure 37% ig, 5,25 g Glycin, 51,3 g Glycerin, 200g eines Alkylbenzylammoniumbromids, 30 g eines ethoxylierten Tridecylalkohols mit einem HLB-Wert von 11,4 und 22,6 g Glykol wurden in VC (s. Fig. 2) vorgelegt und 30 s bei 3 bar im Kreis VC →P3→M1→VC gepumpt. Innerhalb 100 s wurden 2056 g eines Wasserstoff tragenden Organopyolysixan der Viskosität $\eta$ = 40 mPas bei 7 bar aus VA über P1 in M1 (Düsendurchmesser: 1,8/0,9 mm) in den obigen Kreislauf eingedüst. Nach vollendeter Zugabe wurde die Voremulsion in das Puffergefäß VD gepumpt und leicht zeitversetzt über P4 in einem Durchgang im Strahldispergator STR-D bei einem Druckabfall von $\Delta P$ = 250 bar homogenisiert. Die Ergebnisse sind in Tabelle 5 aufgeführt.

Tabelle 5

| Beispiel Nr. | Durchgang Nr. | Teilchengröße Ø [μm] | Zeitdauer [min/s] | Ges. Emulgierung Dauer [min/s] | Stabilität [Monate] |
|---|---|---|---|---|---|
| 15 | V | | 2'10" | | |
| | 1 | 0,368 | 4'40" | | >6 |
| | | | | 6'50" | |

**D. Siliconemulsion in der Mischstation**

**Beispiel 17**

Ein Gemisch aus 96,6 g eines ethoxylierten Tridecylalkohols mit einem HLB-Wert von 11,4, 552,72 g eines Polydimethylsiloxans mit der Viskosität $\eta$ = 500 mPas, 994.84 g eines Mineralölraffinats mit einem Siedebereich von 382 - 432 °C und 691,04 g eines Di - (2ethylhexyl) - phtalats wurde aus der Vorlage VA bei einem Druck von 3 bar vorerst während einer Minute über M1 (Düsendurchmesser: 1.4/0.6 mm) im Kreis VA →P1→M1→VA gepumpt. Innerhalb 3 Minuten wurde anschließend eine Lösung aus 464,52 g Wasser und 0,28 g Benzylalkoholmonohemiformal bei einem Druck von 3,5 - 4 bar über VC →P3→M1 in diesen Kreislauf eingedüst. Nach vollendeter Wasserzugabe wurde noch 3 Minuten bei einem Druck von 3 bar im Kreis VA →P1→M1→VA gepumpt. Dieser Kreislauf wurde noch weitere 10 Minuten mit einen Druck von 12 bar aufrecht erhalten. Es entsteht eine dickflüßige stabile Emulsion. Die Ergebnisse: sind in Tabelle 6 aufgeführt.

Tabelle 6

| Beispiel Nr. | Zeitdauer [min/sek] | Teilchengröße Ø [μm] | Viskosität [mPas] | Stabilität [Monate] |
|---|---|---|---|---|
| 17 | 17 | 1.748 | 2670 | > 6 |

**Beispiel 18** (erfindungsgemäß)

In eine Lösung aus 171,9 g eines ethoxylierten Triglycerids mit einem HLB-Wert von 18,1 und 148,1 g eines ethoxylierten Tridecylalkohols mit einem HLB-Wert von 11,4 in 800 g Wasser, das sich im Kreislauf VC→P3→M1 befand, wurden 2800 g eines Polydimethylsiloxans mit der Viskosität $\eta$ = 1000 mPas über den Wirkstoffkreislauf VA→P1→M1→VA eingedüst. Dabei wurde der anfängliche absolute Druck des Wirkstoffkreislaufes innerhalb von 9 Minuten von 5 auf 12 bar gesteigert. Der Druck des Kreislaufs VC→P3→M1 begleitete - jeweils um 2 bar niedriger - diesen Anstieg. Nach insgesamt 12 Minuten war die Einspeisung des Wirkstoffs beendet und es entstand eine viskose weiße Paste. Diese wird unter Kühlung noch 14 Minuten im Kreislauf VC→P3→M1 bei 10 bar gepumpt.
Anschließend wurden bei 25°C aus VB über P2 4080 g Wasser mit einem Druck von 12 bar in ca. 5 Minuten eingedüst. Dabei verringerte sich der Druck mit zunehmender Verdünnung im Kreislauf VC→P3→M1 auf 4,5 bar, wobei die Pumpe P2 begleitend einen um 2 bar höheren Druck aufwies. Nach vollendeter Wasserzugabe wurde der Druck imm Kreislauf VC→P3→M1 auf 80 bar erhöht und die Emulsion über M1 der Mischstation entnommen.
Es entstand eine niedrigviskose stabile Emulsion.
Die Ergebnisse sind in Tabelle 7 aufgeführt.

**Beispiel 19** (erfindungsgemäß)

In eine Lösung aus 171,9 g eines ethoxylierten Triglycerids mit einem HLB-Wert von 18,1 und 148,1 g eines ethoxylierten Tridecylalkohols mit einem HLB-Wert von 11,4 in 800 g Wasser, das sich im Kreislauf VC→P3→M1 befand, wurden 2800 g eines Polydimethylsiloxans mit der Viskosität $\eta$ = 350 mPas über den Wirkstoffkreislauf VA→P1→M1→VA eingedüst. Dabei wurde der anfängliche absolute Druck des Wirkstoffkreislaufes innerhalb von 6 Minuten von 7 auf 10 bar gesteigert. Der Druck des Kreislaufs VC→P3→M1 begleitete - jeweils um 2 bar niedriger - diesen Ansteig. Nach insgesamt 6 Minuten war die Einspeisung des Wirkstoffe beendet und es entstand eine viskose weiße Paste. Diese wurde unter Kühlung noch 20 Minuten im Kreislauf VC→P3→M1 bei 10 bar gepumpt.

Anschließend wurden bei 25°C auf VB über P2 4080 g Wasser mit einem Druck von 10 bar innerhalb von ca. 5 Minuten eingedüst. Dabei verringerte sich der Druck mit zunehmender Verdünnung im Kreislauf VC→P3→M1 auf 4 bar, wobei die Pumpe P2 begleitend einen um 2 bar höheren Druck aufweis. Nach vollendeter Wasserzugabe wurde der Druck im Kreislauf VC→P3→M1 auf 80 bar erhöht und die Emulsion über M1 der Mischstation entnommen.

Es entstand eine niedrigviskose stabile Emulsion.

Die Ergebnisse sind in Tabelle 7 aufgeführt.

Tabelle 7

| Beispiel Nr. | Zeitdauer [min/sek] | Teilchengröße Ø [μm] | $U_{90}$ | Stabilität [Monate] |
|---|---|---|---|---|
| 18 | 32 | 0,689 | 1,541 | >6 |
| 19 | 32 | 0,531 | 1,168 | >6 |

**Patentansprüche**

1. Vorrichtung zum Herstellen einer Silicon- und/oder Silanemulsion aus einer silicon- und/oder silanhaltigen Wirkstoffkomponente und einer wäßrigen Phase, mit einer ersten Mischstation für die über Pumpen (P1, P2, P3) aus Vorratsbehältem (VA. VB, VC) zugeführten Emulsionskomponenten, **dadurch gekennzeichnet, daß**

   - die erste Mischstation eine Mischeinrichtung (M1) aufweist, in der Düsen (2, 4) einen Wirkstoffstrahl mit der wäßrigen Phase (3) zu einer Voremulsion (5) vermischen,

   - der Abstand der Düsen (2, 4) voneinander das 1- bis 10fache, vorzugsweise das 2- bis 4fache des Durchmessers der zweiten Düse (4), beträgt,

   - der Durchmesser der zweiten nachgeschalteten Düse (4) ca. 2 bis 3 mal so groß ist wie der Durchmesser der ersten Düse (2) und

   - die Mischstation mit einem Strahldispergator (6) verbunden ist, wobei der Strahldispergator (6) die aus der Mischstation austretende Voremulsion (5) erhält, und

   - der Druckabfall im Strahldispergator (STR-D) zwischen 2 und 1000 bar, vorzugsweise zwischen 5 und 600 bar, liegt, und

   - daß ein als Puffergefäß dienender Zwischenbehälter (VD) mit der Mischeinrichtung (M1) verbunden ist, und daß der Strahldispergator (6) die Voremulsion (5) über den Zwischenbehälter (VD) erhält.

2. Vorrichtung nach Anspruch 1, **dadurch gekennzeichnet, daß** die Mischstation eine Vorhomogenisierungseinrichtung (VC, P3) aufweist, in der die Voremulsion in einem Kreislauf vorhomogenisierbar ist.

3. Vorrichtung nach einem der Ansprüche 1 bis 2, **dadurch gekennzeichnet, daß** vor der Mischstation und dem Strahldispergator (6) eine Verdünnungseinrichtung (VB, P2) angeordnet ist.

4. Vorrichtung nach einem der Ansprüche 1 bis 3, **dadurch gekennzeichnet, daß** die Mischeinrichtung (M1) aus zwei hintereinander angeordneten Düsen (2, 4) besteht.

5. Vorrichtung nach Anspruch 4, **dadurch gekennzeichnet, daß** die Druckdifferenz zwischen den Düsen (2, 4) der Mischeinrichtung (M1) zwischen 1 und 10 bar, vorzugsweise zwischen ca. 2 und 3 bar liegt.

6. Vorrichtung nach einem der Ansprüche 1 bis 5, **dadurch gekennzeichnet, daß** die erste Düse (2) der Mischeinrichtung (M1) den Wirkstoffstrahl (1) in die zugeführte wäßrige Phase (3) eindüst und daß die zweite Düse (4) den Wirkstoffstrahl (1) mit der wäßrigen Phase (3) intensiv vermischt und homogenisiert.

**7.** Vorrichtung nach einem der Ansprüche 1 bis 6, **dadurch gekennzeichnet, daß** der Strahldispergator (STR-D) aus mehreren hintereinandergeschalteten Düsen (10, 12) besteht.

**8.** Vorrichtung nach einem der Ansprüche 1 bis 7, **dadurch gekennzeichnet, daß** der absolute Druckabfall in der Mischstation zwischen 2 und 100 bar, insbesondere zwischen 2 und 60 bar, liegt.

**9.** Vorrichtung nach einem der Ansprüche 3 bis 8, **dadurch gekennzeichnet, daß** die Verdünnungseinrichtung aus einem Restwasser und ggf. Zuschläge enthaltenden Behälter (VB) und einer Pumpe (P2) besteht, über die Wasser mit Hilfe der ersten Düse (2) der Mischeinrichtung (M1) der Voremulsion zugegeben werden kann.

**10.** Vorrichtung nach einem der Ansprüche 1 bis 9, **dadurch gekennzeichnet, daß** der Strahldispergator (6) mit einem Vorratsbehälter (VE) verbunden ist, aus dem über eine Pumpe (P5) die Emulsion erneut dem Strahldispergator (6) zuführbar ist.

**11.** Verfahren zur Herstellung feinteiliger wäßriger Silicon- und/oder Silanemulsionen mit einem $U_{90}$-Wert kleiner als 1,2, unter Verwendung der Vorrichtung nach Anspruch 1, umfassend

- die Herstellung einer Voremulsion durch Injizieren der Silicon- und/oder Silankomponente in eine Emulgator enthaltende wäßrige Phase in einer Mischstation, wobei eine von den Düsendimensionen abhängige Druckdifferenz von maximal 10 bar zwischen beiden Strömen bei einem absoluten Druckabfall von unter 100 bar aufrechterhalten wird und

- die Homogenisierung der Voremulsion mittels eines Strahldispergators erfolgt, wobei der $U_{90}$-Wert anhand folgender Formel bestimmt wird:

$$U_{90} = \frac{d90 - d10}{d50}$$

in der d10 bzw. d90 die Durchmesser der verbleibenden kleinsten (d10) bzw. der verbleibenden größten (d90) Teilchen darstellen, die nach Abzug von 10 Gew.-% der Teilchen mit den kleinsten (d10) bzw. mit den größten (d90) Durchmessern von der gegebenen Teilchenmenge übrig bleiben und der d50-Wert dem Durchmesser desjenigen Teilchens entspricht, das größer ist als 50 Gew.-% aller Teilchen und kleiner als 50 Gew.-% aller Teilchen.

**12.** Verfahren nach Anspruch 11, **dadurch gekennzeichnet, daß** die Homogenisierung in einem Strahldispergator, der einen maximalen Druckabfall bis 1000 bar aufweist, erfolgt,

**13.** Verfahren nach Anspruch 12, **dadurch gekennzeichnet, daß** die die Mischstation verlassende Voremulsion direkt oder über ein Puffergefäß dem Strahldispergator zugeführt wird.

**14.** Verfahren nach Anspruch 12, **dadurch gekennzeichnet, daß** die Voremulsion in der Mischstation ein einem Kreislauf vorhomogenisiert wird, bevor sie dem Strahldispergator zugeführt wird.

**15.** Verfahren nach Anspruch 13, **dadurch gekennzeichnet, daß** die Voremulsion mit einem Unterschuß Wasser in der Mischstation in einem Kreislauf homogenisiert wird, bevor sie dem Strahldispergator zugeführt wird, dort gegebenenfalls invertiert wird und anschließend durch Verdünnung mit Wasser auf die erforderliche Konzentration gebracht wird.

**16.** Verfahren nach Anspruch 13, **dadurch gekennzeichnet, daß** die Voremulsion mit einem Unterschuß Wasser in der Mischstation in einem Kreislauf homogenisiert wird, anschließend über eine nachgeschaltete Verdünnungseinrichtung durch Verdünnung mit Wasser auf die erforderliche Konzentration gebracht wird, bevor sie dem Strahldispergator zugeführt wird.

**17.** Verfahren nach Anspruch 14 oder 15, **dadurch gekennzeichnet, daß** das Verdünnungswasser Verdickungsmittel enthält.

**Claims**

1. Device for the preparation of a silicone and/or silane emulsion composed of a silicone- and/or silane-containing active substance component and an aqueous phase, with a first mixing station for the emulsion components fed via pumps (P1, P2, P3) from storage tanks (VA, VB, VC), **characterized in that**

   - the first mixing station has a mixing apparatus (M1) in which nozzles (2, 4) mix a jet of active substance with the aqueous phase (3) to a pre-emulsion (5),

   - the distance between the nozzles (2, 4) is 1 to 10 times, preferably 2 to 4 times, the diameter of the second nozzle (4),

   - the diameter of the second downstream nozzle (4) is about 2 to 3 times as large as the diameter of the first nozzle (2),

   - the mixing station is connected to a jet disperser (6), the jet disperser (6) receiving the pre-emulsion (5) leaving the mixing station,

   - the pressure drop in the jet disperser (STR-D) is between 2 and 1000 bar, preferably between 5 and 600 bar, and

   - **in that** an intermediate container (VD) acting as a buffer vessel is connected to the mixing apparatus (M1), and **in that** the jet disperser (6) receives the pre-emulsion (5) via the intermediate container (VD).

2. Device according to Claim 1, **characterized in that** the mixing station has a pre-homogenization apparatus (VC, P3) in which the pre-emulsion may be pre-homogenized in a circuit.

3. Device according to either of Claims 1 to 2, **characterized in that** a dilution apparatus (VB, P2) is arranged before the mixing station and the jet disperser (6).

4. Device according to one of Claims 1 to 3, **characterized in that** the mixing apparatus (M1) is composed of two nozzles (2, 4) arranged one behind the other.

5. Device according to Claim 4, **characterized in that** the pressure difference between the nozzles (2, 4) of the mixing apparatus (M1) is between 1 and 10 bar, preferably between about 2 and 3 bar.

6. Device according to one of Claims 1 to 5, **characterized in that** the first nozzle (2) of the mixing apparatus (M1) injects the jet of active substance (1) into the aqueous phase (3) fed in, and **in that** the second nozzle (4) intensively mixes and homogenizes the jet of active substance (1) with the aqueous phase (3).

7. Device according to one of Claims 1 to 6, **characterized in that** the jet disperser (STR-D) is composed of several nozzles (10, 12) arranged one behind the other.

8. Device according to one of Claims 1 to 7, **characterized in that** the absolute pressure drop in the mixing station is between 2 and 100 bar, particularly between 2 and 60 bar.

9. Device according to one of Claims 3 to 8, **characterized in that** the dilution apparatus is composed of a container (VB) containing residual water and optional additives and a pump (P2) by means of which water may be added to the pre-emulsion by means of the first nozzle (2) of the mixing apparatus (M1).

10. Device according to one of Claims 1 to 9, **characterized in that** the jet disperser (6) is connected to a storage tank (VE), from which the emulsion can be fed again to the jet disperser (6) by means of a pump (P5).

11. Process for the preparation of fine-particle aqueous silicone and/or silane emulsions with a $U_{90}$ value of less than 1.2, using the device according to Claim 1, comprising

   - the preparation of a pre-emulsion by injecting the silicone and/or silane component into an aqueous phase containing emulsifier in a mixing station, a pressure difference, dependent on the nozzle dimensions, of a maximum of 10 bar being maintained between the two streams with an absolute pressure drop of less than 100 bar, and

- homogenization of the pre-emulsion is accomplished by means of a jet disperser, the $U_{90}$ value being determined according to the following formula:

$$U_{90} = \frac{d90 - d10}{d50}$$

in which d10 and d90 represent the diameters of the smallest (d10) and the largest (d90) particles remaining after subtraction of 10% by weight of the particles with the smallest (d10) and the largest (d90) diameters from a given quantity of particles, and in which the d50 value corresponds to the diameter of that particle which is larger than 50% by weight of all the particles and smaller than 50% by weight of all the particles.

12. Process according to Claim 11, **characterized in that** homogenization takes places in a jet disperser which has a maximum pressure drop of up to 1000 bar.

13. Process according to Claim 12, **characterized in that** the pre-emulsion leaving the mixing station is fed directly or via a buffer vessel to the jet disperser.

14. Process according to Claim 12, **characterized in that** the pre-emulsion is pre-homogenized in the mixing station in a circuit before being fed to the jet disperser.

15. Process according to Claim 13, **characterized in that** the pre-emulsion is homogenized with a deficient amount of water in the mixing station in a circuit before being fed to the jet disperser where it is optionally inverted and then brought to the required concentration by dilution with water.

16. Process according to Claim 13, **characterized in that** the pre-emulsion is homogenized with a deficient amount of water in the mixing station in a circuit, is then brought to the required concentration by dilution with water by means of a downstream dilution apparatus before being fed to the jet disperser.

17. Process according to Claim 14 or 15, **characterized in that** the dilution water contains thickeners.

**Revendications**

1. Dispositif pour produire une émulsion de silicone et/ou de silane à partir d'un composant de substance active contenant un silicone et/ou un silane et d'une phase aqueuse, avec un premier poste de mélange pour les composants de l'émulsion fournis à partir de réservoirs (VA, VB, VC) par l'intermédiaire de pompes (P1, P2, P3), **caractérisé en ce que**

   - le premier poste de mélange comporte un dispositif de mélange (M1) dans lequel des buses (2, 4) mélangent un jet de substance active avec la phase aqueuse (3) en une pré-émulsion (5),
   - la distance mutuelle des buses (2, 4) est 1 à 10 fois, de préférence de 2 à 4 fois le diamètre de la deuxième buse (4),
   - le diamètre de la deuxième buse (4) branchée en aval est environ 2 à 3 fois supérieur au diamètre de la première buse (2) et
   - le poste de mélange est relié à un disperseur de jets (6), le disperseur de jets (6) recevant la pré-émulsion (5) quittant le poste de mélange, et
   - la perte de charge dans le disperseur de jets (STR-D) est située entre 2 et 1 000 bars, de préférence entre 5 et 600 bars, et
   - **en ce qu'**un récipient intermédiaire (VD) servant de récipient tampon est relié au dispositif de mélange (M1), et **en ce que** le disperseur de jets (6) reçoit la pré-émulsion (5) par le biais du récipient intermédiaire (VD).

2. Dispositif selon la revendication 1 **caractérisé en ce que** le poste de mélange comporte un dispositif de pré-homogénéisation (VC, P3) dans lequel la pré-émulsion peut être pré-homogénéisée dans un cycle.

3. Dispositif selon l'une des revendications 1 à 2 **caractérisé en ce qu'**un dispositif de dilution (VB, P2) est disposé en amont du poste de mélange et du disperseur de jets (6).

4. Dispositif selon l'une des revendications 1 à 3 **caractérisé en ce que** le dispositif de mélange (M1) consiste en deux buses (2, 4) disposées l'une derrière l'autre.

5. Dispositif selon la revendication 4 **caractérisé en ce que** la différence de pression entre les buses (2, 4) du dispositif de mélange (M1) est située entre 1 et 10 bars, de préférence entre environ 2 et 3 bars.

6. Dispositif selon l'une des revendications 1 à 5 **caractérisé en ce que** la première buse (2) du dispositif de mélange (M1) injecte le jet de substance active (1) dans la phase aqueuse (3) fournie et **en ce que** la deuxième buse (4) mélange et homogénéise de manière intensive le jet de substance active (1) avec la phase aqueuse (3).

7. Dispositif selon l'une des revendications 1 à 6 **caractérisé en ce que** le disperseur de jets (STR-D) consiste en plusieurs buses (10, 12) branchées les unes derrière les autres.

8. Dispositif selon l'une des revendications 1 à 7 **caractérisé en ce que** la perte de charge absolue dans le poste de mélange est située entre 2 et 100 bars, en particulier entre 2 et 60 bars.

9. Dispositif selon l'une des revendications 3 à 8 **caractérisé en ce que** le dispositif de dilution consiste en un récipient (VB) contenant de l'eau résiduelle et éventuellement des additifs et en une pompe (P2) par le biais de laquelle de l'eau peut être fournie à la pré-émulsion au moyen de la première buse (2) du dispositif de mélange (M1).

10. Dispositif selon l'une des revendications 1 à 9 **caractérisé en ce que** le disperseur de jets (6) est relié à un réservoir (VE) duquel l'émulsion peut être fournie de nouveau au disperseur de jets (6) par le biais d'une pompe (P5).

11. Procédé pour produire des émulsions aqueuses de silicone et/ou de silane à fines particules ayant une valeur $U_{90}$ inférieure à 1,2, au moyen du dispositif selon la revendication 1, comprenant

- la production d'une pré-émulsion par injection du composant silicone et/ou silane dans une phase aqueuse contenant un émulsifiant dans un poste de mélange, où une différence de pression dépendant des dimensions des buses de 10 bars au maximum est maintenue entre les deux courants pour une perte de charge absolue inférieure à 100 bars et
- l'homogénéisation de la pré-émulsion est réalisée au moyen d'un disperseur de jets, où la valeur $U_{90}$ est déterminée au moyen de la formule suivante :

$$U_{90} = \frac{d90 - d10}{d50}$$

où d10 et d90 représentent le diamètre des plus petites particules restantes (d10) et des plus grandes particules restantes (d90), qui restent après retrait de 10% en masse des particules ayant les plus petits diamètres (d10) et ayant les plus grands diamètres (d90) de la quantité de particules donnée, et la valeur d50 correspond au diamètre de la particule qui est plus grande que 50 % en masse de toutes les particules et plus petite que 50 % en masse de toutes les particules.

12. Procédé selon la revendication 11 **caractérisé en ce que** l'homogénéisation est réalisée dans un disperseur de jets qui présente une perte de charge maximale pouvant atteindre 1 000 bars.

13. Procédé selon la revendication 12 **caractérisé en ce que** la pré-émulsion quittant le poste de mélange est envoyée au disperseur de jets directement ou par le biais d'un récipient tampon.

14. Procédé selon la revendication 12 **caractérisé en ce que** la pré-émulsion est pré-homogénéisée dans un cycle dans le poste de mélange avant d'être envoyée au disperseur de jets.

15. Procédé selon la revendication 13 **caractérisé en ce que** la pré-émulsion est homogénéisée dans un cycle dans le poste de mélange avec un défaut d'eau avant d'être envoyée au disperseur de jets dans lequel elle est éventuellement inversée puis amenée à la concentration nécessaire par dilution à l'eau.

16. Procédé selon la revendication 13 **caractérisé en ce que** la pré-émulsion est homogénéisée dans un cycle dans le poste de mélange avec un défaut d'eau, puis amenée à la concentration nécessaire par dilution à l'eau par le biais d'un dispositif de dilution branché en aval avant d'être envoyée au disperseur de jets.

17. Procédé selon la revendication 14 ou 15 **caractérisé en ce que** l'eau de dilution contient un épaississant.

**Fig. 1**

**Fig. 3**

**Fig. 4**

Fig. 2

EP 1 023 118 B1

Fig. 5

$\frac{dc_i}{c_0 \, dd} \, 10^{-6} m$

$U_{90} = \frac{d_{90} - d_{10}}{d_{50}} = 1.21$

$\frac{\Sigma c_i}{c_0}$

Beispiel 10

differentielle Teilchengrößenverteilung [%]

integrale Teilchengrößenverteilung [%]

Teilchendurchmesser [$10^{-6}$m]

EP 1 023 118 B1

# Fig. 6

$$U_{90} = \frac{d_{90} - d_{10}}{d_{50}} = 1.75$$

$\frac{dc_i}{c_0 dd} 10^{-6} m$

$\frac{\Sigma c_i}{c_0}$

differentielle Teilchengrößenverteilung [%]

integrale Teilchengrößenverteilung [%]

Beispiel 9

Teilchendurchmesser [$10^{-6}$m]

EP 1 023 118 B1

# Fig. 7 Differentielle und integrale Teilchengrößenverteilung

Beispiel 18

Teilchendurchmesser $[10^{-6}m]$

EP 1 023 118 B1

# Fig. 8

Differentielle und integrale Teilchengrößenverteilung